# EUROPÄISCHE PATENTSCHRIFT

(11) **EP 1 559 238 B1**
(45) Veröffentlichungstag und Bekanntmachung des Hinweises auf die Patenterteilung: **02.04.2008**
(21) Anmeldenummer: 03788767.6
(22) Anmeldetag: 27.10.2003
(51) Int. Cl.: H04L 9/32

(54) **VERFAHREN UND ANORDNUNG ZUR AUSFÜHRUNG EINER QUALIFIZIERTEN ELEKTRONISCHEN SIGNATUR (QES) MIT HILFE EINES MOBILKOMMUNIKATIONSENDGERÄTS**
METHOD AND DEVICE FOR EXECUTING A QUALIFIED ELECTRONIC SIGNATURE (QES) WITH THE AID OF A MOBILE COMMUNICATIONS TERMINAL
PROCEDE ET DISPOSITIF PERMETTANT D'EXECUTER UNE SIGNATURE ELECTRONIQUE QUALIFIEE (QES) A L'AIDE D'UN TERMINAL DE TELEPHONIE MOBILE

(30) Priorität: 30.10.2002 DE 10250769
(43) Veröffentlichungstag der Anmeldung: 03.08.2005
(73) Patentinhaber: T-Mobile Deutschland GmbH, 53227 Bonn (DE)
(72) Erfinder: STAHL, Hans-Joachim, 10178 Berlin (DE)
(74) Vertreter: Riebling, Peter
(86) Internationale Anmeldenummer: PCT/DE2003/003558
(87) Internationale Veröffentlichungsnummer: WO 2004/040840

(56) Entgegenhaltungen:
- EP-A- 0 473 569
- WO-A-02/28005
- DE-A- 10 032 404
- MET: "MeT Core Specification, Version 1.1" MOBILE ELECTRONIC TRANSACTIONS, 4. Oktober 2001 (2001-10-04), Seiten 1-16, XP002278443

## Beschreibung

Die Erfindung betrifft ein Verfahren und eine Anordnung zur Ausführung einer qualifizierten elektronischen Signatur (QES) mit Hilfe eines Mobilkommunikationsendgeräts, nach dem Oberbegriff der unabhängigen Patentansprüche.

Die sogenannte "qualifizierte elektronische Signatur" (QES) soll in Zukunft im Bereich der elektronischen Datenübermittlung ein Äquivalent zur eigenhändigen Unterschrift darstellen. Hierfür muss sie unter anderem die folgenden Bedingungen erfüllen:
- Sie muss eindeutig sein, d.h. genau einer natürlichen Person zugeordnet werden können,
- sie muss rückverfolgbar sein, d.h. die Identität der Person kann anhand der Signatur herausgefunden werden,
- es muss eine 100% Kontrolle durch Signaturinhaber gegeben sein, d.h. dieser kann die Signatur mit Mitteln erstellen, die unter seiner alleinigen Kontrolle stehen,
- bei der Verschlüsselung von Dokumenten durch die Signatur muss sich erkennen lassen, ob die Daten des Dokuments nachträglich geändert wurden. Eine Verfälschung wie bei schriftlichen Dokumenten darf folglich nicht möglich sein.

Die Grundlage jeder qualifizierten Signatur ist ein privater kryptographischer Schlüssel, der nur dem Signaturschlüsselinhaber bekannt ist.

Der Signaturschlüssel sowie andere persönliche Informationen werden auf einem Signaturmodul, z.B. einer Chipkarte oder Smart Card gespeichert. Ein Auslesen der auf dem Signaturmodul gespeicherten Informationen ist nur anhand eines benutzerspezifischen ldentifikationsmerkmals, z.B. einer PIN, möglich. Zur Überprüfung einer QES wird ein öffentlicher Signaturprüfschlüssel verwendet, der prinzipiell jedermann zugänglich ist.

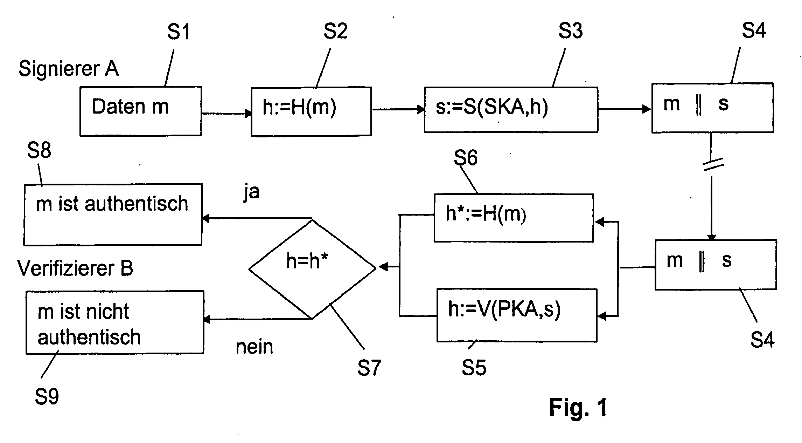

Figur 1 zeigt das Prinzip eines QES-Verfahrens zwischen einem Signierer A und einem Verifizierer B, wie es auch der vorliegenden Erfindung zugrunde liegt. Sendet der Signierer A zu seinen Daten m (S1) eine QES, dann ist dies ein Wert S, der von m und von einer zusätzlichen, geheimen Information, z.B. einem geheimen Schlüssel SKA, abhängt, der nur dem Signierer A bekannt ist (S3). Übertragen wird die signierte Nachricht m || s (S4). Jeder Verifizierer B des elektronischen Signaturverfahrens kann die Echtheit der von A erstellten Signatur verifizieren, wenn er eine weitere, veröffentlichte Information, z.B. in Form eines öffentlichen Schlüssels PKA, von A besitzt und nutzt. Es ist lediglich zu gewährleisten, dass diese öffentliche Information zu A gehört. Da nur A im Besitz der geheimen Information ist, kann nur sie zusammen mit S die elektronische Signatur zum Dateninhalt m generieren. Damit besitzt dieses elektronische Signaturverfahren Beweiskraft gegenüber Dritten. Da die durch die öffentlichen/geheimen Schlüssel parametrisierten Funktionen der Signatur auf endlichen Zahlenräumen basieren, aber auch Daten außerhalb dieser Räume erfasst werden sollen, wird im Falle der QES nach dem Signaturgesetz eine Kopie von m mittels einer Hashfunktion auf einen kleineren Wert H(m) als die Menge aller endlichen Zahlen reduziert (S3). Nur aus diesem reduzierten Wert wird dann die Signatur S berechnet. Dies hat neben der Leistungserhöhung zugleich den Vorteil einer weiteren Steigerung der Sicherheit, da jetzt auch die Reihenfolge der Daten nicht mehr vertauschbar ist. Der Verifizierer B bildet aus dem PKA und der übertragenen Information s einen Wert h: = V(PKA, s) (S5). Dieser Wert h wird mit der aus den Daten m gebildeten Hashfunktion h* (S6) verglichen (S7). Sind beide Werte gleich sind die Daten m authentisch (S8). Sind sie unterschiedlich, so sind die Daten m nicht authentisch (S9).

Wie es z.B. in der WO 02/28005 A offenbart ist, erfolgt die Anwendung der QES in Online-Medien, wie e-Mails oder Übertragung von Datenfiles mittels eines Personal Computers (PC), bis heute z.B. durch Einführen einer Smart Card in ein peripheres, mit dem PC verbundenes Kartenleseterminal und die Eingabe einer persönlichen Identifikationsnummer (PIN) nach dem Prinzip: "Besitz" (Karte) und "Wissen" (PIN) sind Voraussetzung für die Nutzung der QES. Die Kartenleseeinrichtung ist dabei von besonderer Bedeutung, weil die mit einer PC-Tastatur verbundene Eingabe der PIN nach vorliegenden Erfahrungen nicht sicher vor Angriffen Dritter ist. Andererseits sind spezielle Kartenlesegeräte mit Tastaturblock zwar sicher, aber relativ teuer für Endnutzer im Massenmarkt.

Die DE 100 32 404 A1 offenbart ein Mobiltelefon, das zur bargeldlosen Bezahlung und zur Inanspruchnahme weiterer Dienstleistungen über ein Kommunikationsnetz, z.B. das Internet, verwendet werden kann. Das Mobiltelefon dient als Lese-/Schreibeinheit für auf einem elektronischen Speichermedium gespeicherte Daten, die zur Ausführung der Bezahltransaktion notwendig sind. Die Durchführung eines QES Verfahrens ist nicht vorgesehen.

Aus EP 0 473 569 A2 ist ein kontaktloses, induktives Datenübertragungssystem bekannt mit einer Sende- und Empfangsstation und einem batterielosen Transponder, der durch die HF-Signale der Sende- und Empfangsstation mit Strom versorgt wird.

Die bisher bekannt gewordenen Absichten von Geräteproduzenten und Kartenherstellern laufen darauf hinaus, dass Mobilkommunikationsendgeräte (EG) ein Teilnehmeridentifikationsmodul (SIM) enthalten, das bei dessen Ausgabe an den Mobilfunkeilnehmer neben den spezifischen Daten des Teilnehmers auch die Software für den geheimen Schlüssel und die Verschlüsselung enthält. Ein derartiges SIM wird auch als Wireless Identification Module (WIM) bezeichnet. Die erforderliche PIN zum Auslesen der Verschlüsselungsdaten wird in dieser Anordnung über die Tastatur des EG eingegeben. Voraussetzung zur Nutzung der WIM ist der Einsatz eines Plugln-Moduls in der SIM für die hardwareseitige Speicherung des geheimen Schlüssels auf der SIM. Das Vorhalten von spezifischen WIM für Mobilfunkendgeräte ist für den Mobilfunknetzbetreiber mit hohen Vorausinvestitionen verbunden, deren Realisierung risikobehaftet ist.

Die Aufgabe der Erfindung besteht darin, ein Verfahren und eine Anordnung zur Ausführung einer qualifizierten elektronischen Signatur (QES) mit Hilfe eines Mobilkommunikationsendgeräts anzugeben, das im Vergleich zum bisherigen QES Verfahren sowohl beim Anbieter als auch beim Netzbetreiber weniger technischen und administrativen Aufwand und Kosten erfordert.

Diese Aufgabe wird erfindungsgemäß durch die Merkmale der unabhängigen Patentansprüche gelöst.

Vorteilhafte Ausgestaltungen und Weiterbildungen der Erfindung sind in den abhängigen Patentansprüche angegeben.

Der erfindungsgemäße Gedanke beruht darauf, das Mobilkommunikationsendgerät als Leseterminal und Signiereinrichtung sowohl für mobile Applikationen als auch für webgestützte eBusiness-Prozesse über einen PC zu verwenden. Durch Verwendung eines vom Mobilkommunikationsendgerät unabhängigen Signaturmoduls, z.B. einem Personalausweis mit integriertem elektronischen Chip und QES-Funktionalität, kann auf ein WIM im Endgerät verzichtet werden. Der Vorteil der Erfindung besteht darin, dass die Daten zur Ausführung einer QES mit Hilfe eines beliebigen Mobilfunkendgeräts ausgelesen und an entsprechende Applikationen weitergeleitet werden können.

Das Signaturmodul ist ein vom Mobilkommunikationsendgerät unabhängiges Modul, das nicht zum Betrieb des Mobilkommunikationsendgeräts benötigt wird.

### Durch die Erfindung werden folgende weitere Vorteile erreicht:

Das vorgeschlagene Verfahren der Nutzung eines Mobilkommunikationsendgeräts als Leseterminal für kontaktlose Signaturmodule ist im Vergleich mit der Verwendung von herkömmlichen und entsprechend teueren Leseterminals mit relativ geringem Aufwand und Kosten und schnell zu realisieren, da Mobilkommunikationsendgeräte weit verbreitet sind. Außerdem entfällt der WIM-Administrationsaufwand, da sich der Chip nun in einem vom Mobilkommunikationsendgerät unabhängigen Signaturmodul befindet und alle Änderungen, Freischaltungen etc. zwischen den Endkunden und dem Trustcenter direkt abgewickelt werden müssen.

Ein Ausführungsbeispiel der Erfindung wird nachfolgend anhand der beigefügten Zeichnungsfiguren erläutert. Aus den Zeichnungen und der Beschreibung ergeben sich weitere Merkmale, Vorteile und Anwendungen der Erfindung.
Es zeigen:
- Figur 1:: den prinzipiellen Ablauf eines QES-Verfahrens;

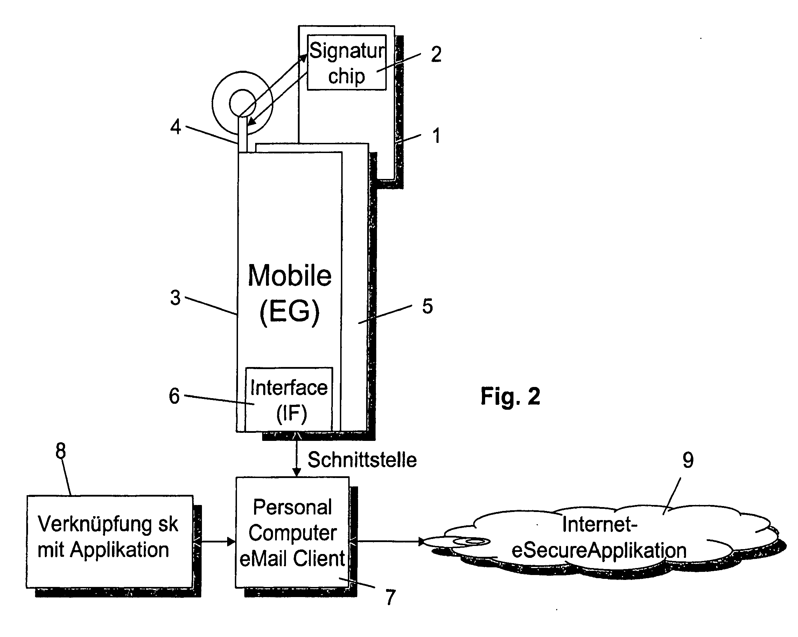

- Figur 2:: eine beispielhafte Anordnung zur Durchführung des erfindungsgemäßen QES-Verfahrens.

Im nachfolgenden Beispiel wird davon ausgegangen, dass als Signaturmodul zur Durchführung einer QES ein Personalausweis 1 mit integriertem Signaturchip 2 verwendet wird, d.h. eine spezielle Smart Card kann entfallen. Der Signaturchip 2 ist nahezu unsichtbar z.B. unter dem Passbild des Ausweises eingeschweißt und besitzt nach Art eines Transponders keine eigene Energieressource zur Speisung seiner Schaltkreise. In diesem Signaturchip 2 sind die notwendigen Informationen zur Ausführung einer QES gespeichert, insbesondere der geheime Schlüssel SKA mit einer Verschlüsselungssoftware für das Auslesen des Schlüssels und einer Verifiziersoftware. Ferner umfasst der Signaturchip 2 einen Modulator und HF-Sender zum Aussenden des geheimen Schlüssels, z.B. in Form einer ASCII-Zeichenfolge, und einen Wandler zum Wandeln von empfangener HF-Signalenergie in eine Gleichspannung zur Speisung der Schaltkreise des Chips 2.

Die notwendigen Transaktionen zwischen dem Signaturchip 2 und dem als Leseterminal verwendeten Mobilkommunikationsendgerät 3 während eines QES-Verfahrens werden drahtlos im dichten Abstand zwischen Personalausweis 1 und Endgerät 3 durchgeführt. Zwischen dem Endgerät 3 und dem Signaturmodul 1 wird voraussetzungsgemäß eines der bekannten drahtlosen Übertragungsverfahren angewandt. Zum Beispiel wird eine Funkübertragung bei gleichzeitiger Speisung der Schaltkreise des Signaturchips 2 auf dem Wege der Spannungsgenerierung mittels elektromagnetischer Induktion seitens des Endgeräts 3 durchgeführt. Hierzu wird das Endgerät 3 vom Benutzer veranlasst, über die Antenne 4 ein HF-Signal abzustrahlen, das von dem im Signaturchip 2 enthaltenen Wandler empfangen und in eine Gleichspannung zur Speisung der Schaltkreise des Chips umgewandelt wird. Das HF-Signal könnte z.B. durch Aussendung eines GPRS-Calls zu einer eigens eingerichteten Dummy-Rufnummer und Errichtung einer GPRS-konformen Verbindung zu dieser Dummy-Rufnummer erfolgen. Während der Verbindungsdauer erfolgt der Energietransfer zum Signaturchip 2 und damit die Übertragung der Verifizierfunktion aus dem Signaturchip 2 über das Endgerät 3 und die dort befindliche Schnittstelle zur Signier- und Chiffriereinheit im PC des Anwenders. Die vom Signaturchip 2 ausgesendete und in der Empfangseinrichtung des Endgeräts 3 empfangene Zeichenfolge wird im Endgerät 3 so lange gespeichert wie sich der Personalausweis 1 im dichten Abstand zum Endgerät 3 befindet. Über in kurzen Intervallen vom Endgerät 3 ausgesendete GPRS-Signale zum Signaturchip 2 mit kleiner Periodendauer wird geprüft, ob die Zeichenfolge noch in gleicher Weise empfangen wird wie beim Start des Prozesses. Sobald dies nicht mehr der Fall ist, wird der flüchtige Speicher in der Empfangseinrichtung des Endgeräts 3 gelöscht.

Das Mobilkommunikationsendgerät 3 muss, um die Funktion eines herkömmlichen Leseterminals zu übernehmen, über eine ebensolche Schnittstelle verfügen und die notwendige Software und Hardware eines Leseterminals implementiert haben. Neben den üblichen Komponenten eines Mobilkommunikationsendgeräts 3, wie Funkmodul, Tastatur, Anzeige, Audiomodul, Mikrofon, Lautsprecher sind folgende Zusatzkomponenten 5 vorhanden: ein HF-Empfänger zum Empfang der Signale des Signaturmoduls 2, ein Demodulator, ein refreshable Sample-/Hold-Speicher, eine Entschlüsselungseinheit zum entschlüsseln der übertragenen Daten, eine Verifikationsfunktion für das vom Benutzer einzugebende persönliche Identffikationsmerkmal, z.B. in Form einer PIN, und eine Übertragungsfunktion zur Übermittlung des ausgelesenen geheimen Schlüssels SKA über eine Schnittstelle 6 zu einem Personal Computer 7. Für die Ausübung der Funktion einer QES-Applikation vom Endgerät 3 ausgehend im Online-Betrieb des Personal Computer 7 wird eine der bekannten, drahtgebundenen oder drahtlosen Schnittstellen 6 zwischen Endgerät 3 und PC 7 eingesetzt, z.B. ein Schnittstellenkabel, lrDA, oder Bluetooth.

Der Verfahrensablauf beim Signaturprozess entspricht dem Verfahren gemäß Figur 1. Die benötigten Software- und Hardware-Komponenten sind prinzipiell dieselben wie bei der Verwendung eines externen Lesegerätes mit separater Tastatureingabe. Bei Verwendung des mobilen Endgeräts 3 sind jedoch viele notwendige Einrichtungen, wie Tastatur, Anzeige, Datenspeicher, Datenverarbeitungseinheit etc. bereits vorhanden.

Durch die Datenübertragung über die Schnittstelle 6 zwischen Endgerät 3 und PC 7 erfolgt letztlich die Verifikation des mittels des Endgeräts 3 ausgelesenen Schlüssels der Verifizierfunktion mittels eines SW Plug-In im PC 7. In diesem Falle tritt das Endgerät 3 nur als vermittelndes Gerät zwischen dem Signaturchip 2 und dem PC 7 auf. Die Signierung, Verschlüsselung und am anderen Ende die Verifikation finden vorzugsweise immer im Signaturmodul 1 und der entsprechenden Software im PC 7 statt. Der geheime Schlüssel wird entsprechend mit einer Applikation 8, z.B. einem Dokument, verknüpft. Das signierte Dokument wird z.B. über das Internet an eine entsprechende sichere Applikation 9 übertragen, wo es ausgelesen und verifiziert wird.

Sobald aber das Endgerät selbst zur Datenverarbeitungseinrichtung (PC) wird, z.B. bei Mobilfunkendgeräten mit Personal Digital Assistent, entfällt natürlich die Interface-Verbindung zur PC-Desktop Station. Für diesen Fall wäre zur besseren Lesbarkeit der hinter der Signatur liegenden Anwendungen lediglich eine entsprechend deutlichere und größere Anzeigeeinheit erforderlich, als dies heute mit den Displays der Mobilfunkgeräte gegeben ist. Eine drahtlose Verbindung, z.B. Bluetooth, zwischen Mobilfunkgerät und einem solchen Anzeigegerät ist durchaus realistisch. Möglich wäre auch eine Schnittstelle am Endgerät, die den Datenaustausch zwischen dem Signaturchip 2 des Personalausweises 1 und einer vorhandenen WIM erledigt.

### Bezugszeichenliste

- 1: Personalausweis (Signaturmodul)
- 2: Signaturchip
- 3: Mobiles Endgerät
- 4: Antenne
- 5: Interface
- 6: Personal Computer
- 7: Softwareapplikation
- 8: PC-Applikationen (Dokumente, Mails, etc.)
- 9: eSecure Applikationen Internet

## Patentansprüche

1. Verfahren zur Ausführung einer qualifizierten elektronischen Signatur QES mit Hilfe eines Mobilkommunikationsendgeräts (3), wobei auf einem Signaturmodul (1) benutzerspezifische Informationen zur Ausführung der QES abgelegt sind, die mit Hilfe eines Leseterminals unter Verwendung eines persönlichen Identifikationsmerkmals des Benutzers auslesbar sind, wobei die aus dem Signaturmodul ausgelesenen benutzerspezifischen Informationen vom Leseterminal an eine Datenverarbeitungseinrichtung (7) übertragen werden, in der anhand der ausgelesenen benutzerspezifischen informationen ein QES-Verfahren durchgeführt wird,
**dadurch gekennzeichnet,**
**dass** das Mobilkommunikationsendgerät (3) als Leseterminal verwendet wird, und dass die Übertragung von Daten zwischen dem Signaturmodul (1) und dem Mobilkommunikationsendgerät (3) über eine drahtlose Schnittstelle erfolgt.

2. Verfahren nach Anspruch 1, **dadurch gekennzeichnet, dass** als Signaturmodul (1) ein vom Mobilkommunikationsendgerät (3) unabhängiges Modul verwendet wird.

3. Verfahren nach einem der vorhergehenden Ansprüche, **dadurch gekennzeichnet, dass** als Signaturmodul (1) eine Chipkarte, Smart Card oder ein elektronischer Personalausweis verwendet wird.

4. Verfahren nach einem der vorhergehenden Ansprüche, **dadurch gekennzeichnet, dass** das Identifikationsmerkmal am Mobilfunkendgerät (3) eingebbar ist.

5. Verfahren nach einem der vorhergehenden Ansprüche, **dadurch gekennzeichnet, dass** die Übertragung von Daten zwischen dem Mobilkommunikationsendgerät (3) und der Datenverarbeitungseinrichtung (7) über eine drahtlose oder drahtgebundene Schnittstelle (6) erfolgt.

6. Verfahren nach einem der vorhergehenden Ansprüche, **dadurch gekennzeichnet, dass** als drahtlose Schnittstelle (6) eine Infrarot- oder Bluetooth-Schnittstelle verwendet wird.

7. Verfahren nach einem der vorhergehenden Ansprüche, **dadurch gekennzeichnet, dass** das Mobilkommunikationsendgerät (3) als Datenverarbeitungseinrichtung (7) zur Durchführung eines QES-Verfahrens verwendet wird.

8. Verfahren nach einem der vorhergehenden Ansprüche, **dadurch gekennzeichnet, dass** das Mobilkommunikationsendgerät (3) mit der erforderlichen Hardware und Software zur Durchführung eines QES-Verfahrens ausgerüstet ist.

9. Verfahren nach einem der vorhergehenden Ansprüche, **dadurch gekennzeichnet, dass** das Signaturmodul (1) vom Mobilkommunikationsendgerät (3) mit Strom versorgt wird.

10. Verfahren nach einem der vorhergehenden Ansprüche, **dadurch gekennzeichnet, dass** die Stromversorgung des Signaturmoduls (1) drahtlos durch elektromagnetische Induktion erfolgt.

11. Anordnung zur Ausführung einer qualifizierten elektronischen Signatur QES mit Hilfe eines Mobilkommunikationsendgeräts (3), welche umfasst:
ein Signaturmodul (1) mit benutzerspezifischen Informationen zur Ausführung der QES,
ein Lesegerät zum Auslesen der benutzerspezifischen Inforrnationen aus dem Signaturmodul (1) unter Verwendung eines persönlichen ldentifikationsmerkmals des Benutzers, und
eine Datenverarbeitungseinrichtung (7) zur Durchführung eines QES-Verfahrens anhand der durch das Lesegerät aus dem Signaturmodul (1) ausgelesenen Informationen, wobei das Signaturmodul (1) ein vom Mobilkommunikationsendgerät (3) unabhängiges Modul ist,
**dadurch gekennzeichnet,**
**dass** das Lesegerät ein Mobilkommunikationsendgerät (3) ist, dass sowohl das Signaturmodul (1) als auch das Mobilkommunikationsendgerät (3) über eine gemeinsame drahtlose Schnittstelle zur Datenübertragung verfügen, und dass das Mobilkommunikations endgerät einen integrierten Schaltkreis mit Sample-/Hold-Funktion enthält, damit die nur für kurze Zeit ausgesendeten Hochfrequenzsignale wirksam für den länger andauernden Verifizier-/ Signierprozess verwendbar sind.

12. Signaturmodul zur Durchführung des Verfahrens gemäß einem der Ansprüche 1 bis 10, umfassend eine Signalverarbeitungs- und Speichereinrichtung zur Speicherung einer benutzerspezifischen Information;
**gekennzeichnet durch**:
eine Modulationseinrichtung,
eine HF-Sendeeinrichtung zur Übertragung der besagten benutzerspezifischen Information an ein Lesegerät, und
eine Stromversorgungseinrichtung zur Umwandlung von elektromagnetischer Induktionsenergie in Gleichstrom zur Versorgung des Moduls mit Strom.

## Claims

1. Method for making a qualified electronic signature QES by means of a mobile communications terminal (3), wherein on a signature module (1) is filed user-specific information for making the QES, which is readable by means of a read terminal using a personal identification feature of the user, the user-specific information which is read out from the signature module (1) being transmitted from the read terminal to a data processing device (7) in which a QES method is carried out with the aid of the user-specific information which is read out,
**characterised in that** the mobile communications terminal (3) is used as the read terminal, and **in that** the transmission of data between the signature module (1) and the mobile communications terminal (3) is effected via a wireless interface.

2. Method according to claim 1, **characterised in that** a module independent of the mobile communications terminal (3) is used as the signature module (1).

3. Method according to one of the preceding claims, **characterised in that** a chip card, smart card or electronic identity card is used as the signature module (1).

4. Method according to one of the preceding claims, **characterised in that** the identification feature can be entered at the mobile telephone terminal (3).

5. Method according to one of the preceding claims, **characterised in that** the transmission of data between the mobile communications terminal (3) and the data processing device (7) is effected via a wireless or hard-wire interface (6).

6. Method according to one of the preceding claims, **characterised in that** an infrared or bluetooth interface is used as the wireless interface (6).

7. Method according to one of the preceding claims, **characterised in that** the mobile communications terminal (3) is used as the data processing device (7) for carrying out a QES method.

8. Method according to one of the preceding claims, **characterised in that** the mobile communications terminal (3) is equipped with the necessary hardware and software for carrying out a QES method.

9. Method according to one of the preceding claims, **characterised in that** the signature module (1) is supplied with current by the mobile communications terminal (3).

10. Method according to one of the preceding claims, **characterised in that** current supply to the signature module (1) is effected wirelessly by electromagnetic induction.

11. Arrangement for making a qualified electronic signature QES by means of a mobile communications terminal (3), which includes:
a signature module (1) with user-specific information for making the QES,
a reader for reading the user-specific information from the signature module (1) using a personal identification feature of the user, and
a data processing device (7) for carrying out a QES method with the aid of the information read out from the signature module (1) by the reader,
the signature module (1) being a module independent of the mobile communications terminal (3),
**characterised**
**in that** the reader is a mobile communications terminal (3), in that both the signature module (1) and the mobile communications terminal (3) have a common wireless interface for data transmission, and in that the mobile communications terminal (3) contains an integrated circuit with sample/hold function so that the high-frequency signals which are emitted only for a short time are effectively usable for the longer-lasting verifying/signing process.

12. Signature module for carrying out the method according to one of claims 1 to 10, including a signal processing and storage device for the storage of user-specific information;
**characterised by**:
a modulation device,
a HF transmitting device for transmitting said user-specific information to a reader, and
a current supply device for the conversion of electromagnetic induction energy to direct current for supply of the module with current.

## Revendications

1. Procédé pour exécuter une signature électronique qualifiée QES à l'aide d'un terminal de communication mobile (3), selon lequel des informations propres à l'utilisateur et destinées à l'exécution de la signature QES sont stockées sur un module de signature (1) et sont aptes à être lues à l'aide d'un terminal de lecture, grâce à une caractéristique d'identification personnelle de l'utilisateur, et les informations propres à l'utilisateur qui sont lues dans le module de signature sont transmises par le terminal de lecture à un dispositif informatique (7) dans lequel une procédure QES est mise en oeuvre à l'aide des informations lues dans le module de signature,
**caractérisé en ce que** le terminal de communication mobile (3) est utilisé comme terminal de lecture et **en ce que** la transmission de données entre le module de signature (1) et ledit terminal (3) se fait par l'intermédiaire d'une interface sans fil.

2. Procédé selon la revendication 1, **caractérisé en ce qu'**on utilise comme module de signature (1) un module indépendant du terminal de communication mobile (3).

3. Procédé selon l'une des revendications précédentes, **caractérisé en ce qu'**on utilise comme module de signature (1) une carte à puce, une carte à mémoire ou une carte d'identité électronique.

4. Procédé selon l'une des revendications précédentes, **caractérisé en ce que** la caractéristique d'identification est apte à être entrée sur un terminal de téléphonie mobile (3).

5. Procédé selon l'une des revendications précédentes, **caractérisé en ce que** la transmission de données entre le terminal de communication mobile (3) et le dispositif informatique (7) se fait par l'intermédiaire d'une interface sans fil ou filaire (6).

6. Procédé selon l'une des revendications précédentes, **caractérisé en ce qu'**on utilise comme interface (6) sans fil une interface à infrarouge ou Bluetooth.

7. Procédé selon l'une des revendications précédentes, **caractérisé en ce que** le terminal de communication mobile (3) est utilisé comme dispositif informatique (7) pour mettre en oeuvre une procédure QES.

8. Procédé selon l'une des revendications précédentes, **caractérisé en ce que** le terminal de communication mobile (3) est équipé du matériel et du logiciel nécessaires pour mettre en oeuvre une procédure QES.

9. Procédé selon l'une des revendications précédentes, **caractérisé en ce que** le module de signature (1) est alimenté en courant par le terminal de communication mobile (3).

10. Procédé selon l'une des revendications précédentes, **caractérisé en ce que** l'alimentation en courant du module de signature (1) se fait sans fil, par induction électromagnétique.

11. Dispositif pour exécuter une signature électronique qualifiée QES à l'aide d'un terminal de communication mobile (3), qui comprend :
- un module de signature (1) avec des informations propres à l'utilisateur pour l'exécution de la signature QES,
- un lecteur pour lire les informations propres à l'utilisateur dans le module de signature (1) à l'aide d'une caractéristique d'identification personnelle de l'utilisateur, et
- un dispositif informatique (7) pour mettre en oeuvre une procédure QES à l'aide des informations lues par le lecteur dans le module de signature (1),
le module de signature (1) étant un module indépendant du terminal de communication mobile (3),
**caractérisé en ce que** le lecteur est constitué par un terminal de communication mobile (3), **en ce que** le module de signature (1) et le terminal de communication mobile (3) disposent tous les deux d'une interface sans fil commune pour la transmission de données, et **en ce que** le terminal de communication mobile contient un circuit intégré avec une fonction d'échantillonnage-blocage pour que les signaux haute fréquence émis pour une courte durée seulement soient utilisables efficacement pour la procédure de vérification/signature qui dure plus longtemps.

12. Module de signature pour la mise en oeuvre du procédé selon l'une des revendications 1 à 10, comprenant un dispositif de traitement de signaux et de mémoire pour le stockage d'une information propre à l'utilisateur,
**caractérisé par**
- un dispositif de modulation,
- un émetteur haute fréquence pour transmettre ladite information propre à l'utilisateur à un lecteur, et
- un dispositif d'alimentation en courant pour transformer l'énergie d'induction électromagnétique en courant continu pour alimenter le module en courant.
